# EUROPEAN PATENT SPECIFICATION

(11) **EP 3 822 067 B1**
(45) Date of publication and mention of the grant of the patent: **10.01.2024**
(21) Application number: 19425082.5
(22) Date of filing: 18.11.2019
(51) Int. Cl.: B29C 70/54, B29C 70/74, B29C 70/68, B32B 3/08, B32B 3/26, B32B 27/08

(54) **METHOD AND MACHINE FOR PROCESSING A REINFORCED MULTILAYER PANEL**
VERFAHREN UND MASCHINE ZUR BEARBEITUNG EINER VERSTÄRKTE MEHRSCHICHTIGE PLATTE
PROCÉDÉ ET MACHINE POUR TRAITER UN PANNEAU MULTICOUCHE RENFORCÉ

(43) Date of publication of application: 19.05.2021
(73) Proprietor: Paolini S.p.A., 5035 Narni (Terni) (TR) (IT)
(72) Inventor: Paolini, Giorgio, 5035 Narni (Terni) (TR) (IT)
(74) Representative: Gitto, Serena

(56) References cited:
- EP-A1- 2 875 946
- US-A- 4 076 877

## Description

The present invention relates to a method for manufacturing at least one piece through the processing of a reinforced multilayer panel.

### State of the art

Multilayer panels, used for structural applications in the transport sector, and in particular in the nautical and aviation sector, must meet the main requirement of lightness to allow a reduction in fuel consumption and at the same time to guarantee a performance increase in terms of vehicle speed.

Depending on the needs required by the specific sector of reference, the multilayer panels (so-called sandwich panels) are divided into different product classes, for example in lightened, superlight, hyperlight or non-combustible panels.

To minimize the overall weight of the panel, the multilayer panels have an intermediate filling layer (so-called core) made of a lower weight material and two layers of external coating (so-called skins) made with the material that have to be provided as an external coating.

To guarantee the assembly of the connecting elements necessary to allow the assembly between the panels themselves, and the panels to the main structure (for example hinges, locks, slots or screw housings) it is necessary to insert structural reinforcements inside the multilayer panel, because the light materials used for the filling layer are not suitable for the tensile and / or tearing stress to which the panel is subjected.

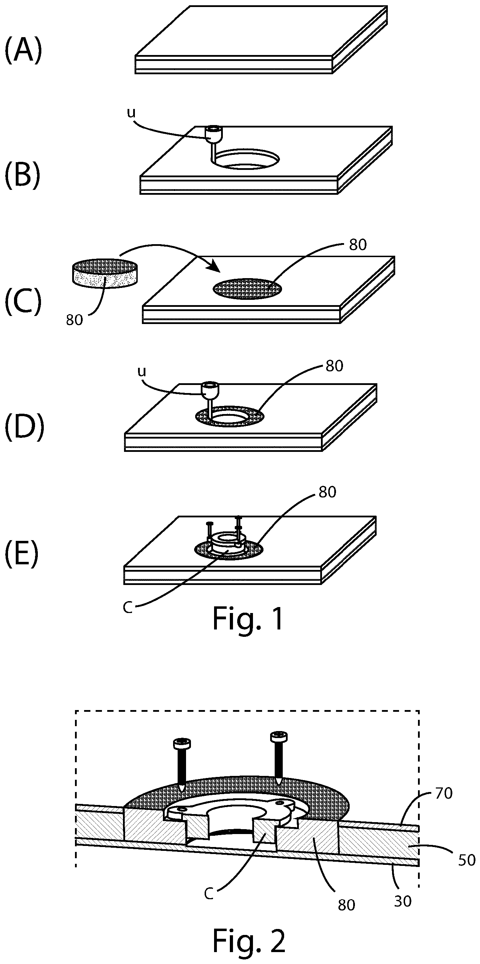

In the prior art, to proceed with the insertion of a structural reinforcement element, for example a rigid element, a cutting / milling operation (tool indicated with U in figure 1B) is provided on the preformed sandwich panel.

Therefore, it will be necessary to remove a portion of the material, the external skin and the filling layer of the preformed panel, dimensionally compatible with the size of the structural reinforcement to be inserted.

A drawback of the prior art is that the milling of the panel involves a weakening of the entire structure of the multilayer panel.

Once the respective seat has been made, the structural reinforcement insert is manually inserted into the panel before going on to the subsequent stages of any lacquering or veneering and assembly of the connecting elements.

A drawback of the prior art is that manual insertion of the reinforcement inserts reduce the speed of the producting process and increases the probability of error. This operation therefore provides a loss in terms of processing times, efficiency, and therefore an increase in the costs of the entire producting process.

A further disadvantage of the prior art is that, once the structural reinforcement has been inserted in the specially obtained seat, by milling and removing material, the same structural reinforcement is easily removable from the respective seat following a tensile or tearing stress.

If the final component made with known production systems, shown for example in Figure 2 in cross section, is analysed, will be noticed that the structural reinforcement inserted into the panel structure from the side of the upper skin will not have any type of coverage or impediment to escape from the respective location.

Even in the event that a surface lacquering or a veneer of the external surfaces of the panel is provided, for example to define the final aesthetics of the panel, the insert is covered with a finishing layer (for example wood) of small thickness, for example of about 6/10 mm, and is therefore very fragile with respect to tensile or tearing stresses.

For example, at a stress test performed in accordance with the reference sector standards, an interlocking clip C (or bayonet) like the one shown in Figure 2 has extremely low values.

In terms of product quality, the processes of the known type performed on multilayer panels greatly degrade their quality, in terms of performance, compared to the starting panel.

EP2875946A1 discloses a method for manufacturing at least one piece through the processing of a reinforced multilayer panel having a substantially planar filling layer, a first coating layer coupled to a first face of the filling layer and a second coating layer coupled to a second face of the filling layer. The method comprises removing at least one portion of said filling layer to obtain at least one seat for housing at least one respective reinforcing element, housing a reinforcing element in said seat, coupling a second coating layer to an upper face of said filling layer, and removing a portion of said second coating layer at said reinforcement element, so as to allow the access to said reinforcement element from a position external to the panel.

### Summary of the invention

Therefore, the technical problem posed and solved by the present invention is that of providing a manufacturing method according to claim 1 and by a machine according to claim 10.

Preferred features of the present invention are provided in the dependent claims.

The present invention provides some relevant advantages.

In particular, the characteristic of being able to work the filling layer without weakening the upper coating layer allows to increase the structural resistance of the panel.

Furthermore, the insertion of the reinforcing element in the filling layer before the coupling of the upper coating layer, allows to ensure a greater grip of the insert inside the panel and to guarantee a better seal and resistance to tensile or tearing stresses.

Advantageously, the invention according to the present invention allows to extend the offer of the multilayer panels in terms of customization and variety of materials that can be coupled.

A further advantage is that the method according to the present invention allows to make a plurality of multilayer components reinforced in a single working cycle performed on the panel.

A still further advantage is that, by positioning identification elements on the panels being processed, it is possible to optimize the arrangement of a plurality of pieces obtainable from the same panel and to reduce both the possibility of error and material waste.

Other advantages, characteristics and using methods of the present invention will become clear from the following detailed description of some embodiments, presented by way of example and without limitation.

### Brief description of the figures

The present invention will now be described for illustrative but not limitative purposes, according to its preferred embodiments, with particular reference to the figures of the attached drawings, wherein:
Figure 1 shows a schematic view of the prior art panel manufacturing steps;
Figure 2 shows a section view of a coupling between an interlocking clip C and a reinforcing element in a panel of known type;
Figure 3 shows a schematic view of the steps of an embodiment of the method according to the present invention;
Figure 4 shows a section view of a coupling between an interlocking clip C and a reinforcing element in an embodiment of a panel according to the present invention;

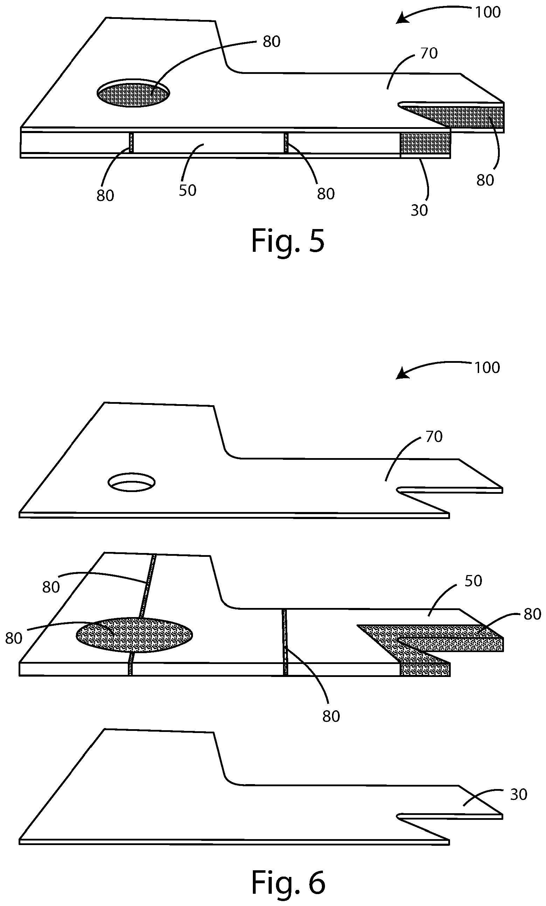

Figure 5 shows a perspective view of a panel according to the present invention;
Figure 6 shows an exploded view of the panel of Figure 5.

### Detailed description of preferred embodiments

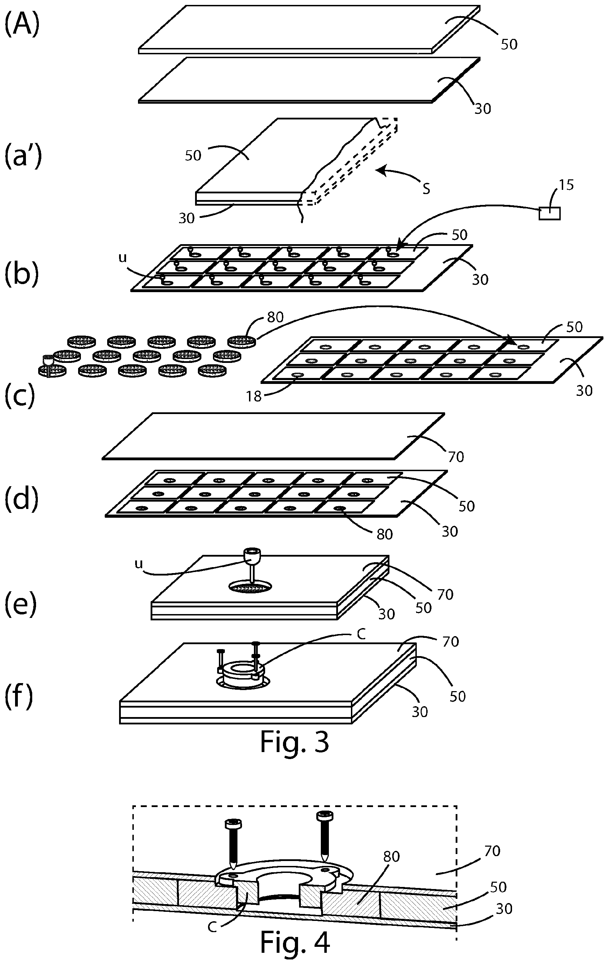

With reference to Figure 3, some steps of a first embodiment of the method according to the present invention are schematically shown.

A multilayer panel, or sandwich, as shown in the figures, provides a substantially planar filling layer 50, a first coating layer 30 coupled to a first face of the filling layer 50, and a second coating layer 70 coupled to a second face of the filling layer 50.

Advantageously, the method according to the present invention provides for the manufacturing of the reinforced multilayer panel starting from the positioning of the filling layer 50 on a support surface of a machine for processing panels. A removing step of a portion of material therefore takes place only on the coating layer 50 and on this a seat 18 is obtained for housing a reinforcing element 80.

In an alternative embodiment of the method according to the present invention, the positioning of a half-panel S is provided on a support surface of a panel processing machine.

As schematized in figure 3(a'), the half-panel S is a semi-finished product which provides a coupling between a lower coating layer 30 and the filling layer 50 prior to the positioning on the processing machine.

Advantageously, the presence of the lower coating layer 30 allows greater stability both during the handling of the semi-finished product and during the processing and removing of material from the filling layer 50.

Once the seat 18 has been made, for example by means of a milling or a process of removing material from the filling layer 50, a step of housing the reinforcement element 80 is provided in the respective seat 18.

Advantageously, as shown in figure 3(b), the method according to the present invention allows to make a plurality of seats 18 on the same panel in the same material removing phase.

As shown in figure 3(c), an automatic positioning phase of a plurality of reinforcing elements 80 in the respective seats 18 is also provided, advantageously allowing to minimize downtime, significantly reducing them compared to what is foreseen in the processes of the prior art, and therefore reduce the related processing costs.

If only the filling layer 50 has been positioned in the machine, once the reinforcement elements 80 have been inserted into the respective seats, a first coating layer 30 is coupled to a lower face of said filling layer 50, so as to obtain a reinforced half-panel.

A second coating layer 70 is then coupled to the reinforced half-panel S, in particular coupled to an upper face of the filling layer 50.

Therefore, advantageously, the reinforcing element 80 of the multilayer panel 100 will be completely contained between the two coating layers 30 and 70 of the filling layer 50.

In this way, also after further machining operations for removing portions of material, for example dictated by the need to fix connection components between the panels (for example hinges or tie rods), as shown in figures 3 (f) and 3 (g), the reinforcing element 80 may have at least a portion completely contained between the two coating layers, allowing an increase in the structural resistance with respect to tensile or tearing stresses.

As anticipated above, the coupling of the second coating layer 30 to a lower face of the filling layer 50 precedes the step of removing a portion of the filling layer 50 to obtain a seat 18 for housing a reinforcing element 80.

In particular, the positioning of the filling layer 50, or of the half-panel S, on the panel processing machine involves a phase for detecting the positioning data, so as to ensure the correct positioning of the panel during the processing and cutting phases of the multilayer panel.

In a preferred embodiment, the aforementioned positioning phase provides a sub-phase of "nesting", that is, an optimization of the positioning of the pieces to be machined in the same panel, so as to optimize the cutting operations of the panel and minimize the waste produced during processing.

To ensure the traceability of the pieces during processing, a phase of coupling of at least one identification element 15 to the filling layer 50 is provided, so as to uniquely identify a piece that must be obtained by cutting the multilayer panel.

Preferably, the identification element 15 comprises an Rfid tag.

The reinforcing elements 80 are obtained or obtainable by processing a panel of reinforcing material and are made available in a shape suitable for insertion, for example by means of an automatic robotic arm, in a shape coupling or interference configuration, in the respective seats 18 formed on the filling element 50.

In an alternative embodiment of the method according to the present invention, a step is provided for casting/extruding a thermoplastic or thermosetting material in each seat 18 to form the respective reinforcing elements 80.

In this case, a solidification/hardening phase of the reinforcing element 80 is provided before proceeding with the subsequent processing phases, therefore the processing times may be longer.

Advantageously, through the aforementioned casting or extrusion operations, it is possible to obtain reinforcement elements having materials and geometries completely customizable.

Once the reinforcing elements 80 are housed in their respective seats 18, a grinding process of the entire upper face of the filling layer 50 and of the reinforcing elements contained therein is preferably provided, so as to uniform its thickness and the surface finish.

A second coating layer 70 is then positioned on the upper face of the reinforced filling layer 50, as shown in Figure 3(e).

After coupling the second coating layer 70 on the upper face of the reinforced filling layer 50, pressure is exerted on the second coating layer 70 along an axis substantially transverse to the substantially planar filling layer 50, so as to allow a stabilization of the coupling between the layers of the reinforced multilayer panel 100.

Advantageously, to guarantee a stabilization of the panel during the removing of a portion of the filling layer 50 and realization of the seats 18, a vacuum condition is created between a perforated support surface of the machine and the panel being processed.

An advantage of the method according to the present invention is that the processing operations can be carried out on a plurality of components at a time with little contribution of manual workings and therefore with a considerable reduction of the times and the final costs.

Finally, a further advantage of the method for manufacuring a reinforced multilayer panel according to the present invention is that it can be easily implemented on panel processing machinery, therefore being a method achievable at competitive costs.

In particular, a machine for manufacuring a reinforced multilayer panel 100 according to a first embodiment of the present invention comprises a working surface configured to support at least a filling layer 50 of the panel being worked, a working group, comprising panel processing tools, a group for positioning a reinforcing element, and a press group configured to allow the coupling of at least one coating layer to a face of a panel filling layer.

In particular, the working group, configured to be moved or movable on the support surface of the machine, comprises at least one milling member to obtain at least one seat 18 on the filling layer 50 and / or to remove at least a portion of the second coating layer 70.

Advantageously, the aforementioned machine is characterized in that it comprises a logic control unit configured to carry out the steps of the method described above, for the realization of a reinforced multilayer panel 100.

In a further embodiment, the machine according to the present invention has a positioning group comprising an extrusion or casting head of a thermoplastic or thermosetting material for the realization of the reinforcing element 80 in a respective seat 18.

In this case, the machine also includes a hardening station for the cast or extruded reinforcing element 80 in the seat 18.

Advantageously, the reinforced multilayer panel 100 made with the method according to the present invention, is characterized in that the reinforcing element 80 is housed in the seat 18 of the filling layer 50 and is interposed between the first coating layer 30 and the second coating layer 70.

Figure 4 shows a section view of the reinforced multilayer panel according to the present invention, obtained at a reinforcement element 80 inserted in the filling layer 50 and with an interlocking clip connected to the reinforcement element.

Advantageously, the figure highlights the fact that the structural reinforcement is contained between both the skins (covering layers) of the multilayer panel.

This confers the highest quality of the panels obtained with the method according to the present invention compared to the panels of the prior art, allowing maximum freedom of choice in customizing the processes and reinforcements to be inserted in the filler layer 50, and at the same time an increase in the performance and structural strength of the panel at the connection elements.

The present invention has so far been described with reference to preferred embodiments. It is to be understood that other embodiments may exist that pertain to the same inventive core, as defined by the scope of protection of the claims set out below.

## Claims

1. Method for manufacturing at least one piece through the processing of a reinforced multilayer panel (100), arranged on a panel processing machine, wherein the multilayer panel has a substantially planar filling layer (50), a first coating layer (30) coupled to a first face of the filling layer (50), and a second coating layer (70) coupled to a second face of the filling layer (50), said method comprising a step of coupling a first coating layer (30) to a lower face of said filling layer (50) and the steps of:
(a) placing at least one filling layer (50) on a support surface of a panel processing machine, said step (a) of placing at least one filling layer (50) comprises the following sub phase:
(a2) coupling at least one identification element (15), to said filling layer (50) to identify at least one piece which must be obtained by cutting the multilayer panel;
(b) removing at least one portion of said filling layer (50) to obtain at least one seat (18) for housing at least one respective reinforcing element (80);
(c) housing a reinforcing element (80) in said seat (18);
(d) coupling a second coating layer (70) to an upper face of said filling layer (50);
(e) removing a portion of said second coating layer (70) at said reinforcement element (80), so as to allow the access to said reinforcement element (80) from a position external to the panel;
(f) cutting the multilayer panel to obtain said at least one piece.

2. Method according to the preceding claim, comprising a step of nesting and optimizing the position of the pieces to be machined in the same panel;

3. Method according to any one of the preceding claims, wherein said step of coupling a first coating layer (30) to a lower face of said filling layer (50) is provide before said step (a) of positioning at least one filling layer ( 50) on a support surface of a panel processing machine.

4. Method according to any one of the preceding claims wherein said step (a) of positioning at least one filling layer (50) comprises the following sub-phase:
(a1) detecting positioning data of said at least one filling layer (50).

5. Method according to any one of the preceding claims, wherein said step (c) of housing a reinforcing element (80) in said seat (18) comprises the following sub-step:
(c1) casting/extruding a thermoplastic or thermosetting material in said seat (18) to form said reinforcing element (80).

6. Method according to the preceding claim, wherein said sub-phase (c1) of casting/extruding a thermoplastic or thermosetting material in said seat (18) to form said reinforcing element (80) comprises the following sub-phase:
(c2) solidifying said thermoplastic or thermosetting material cast or extruded in said seat (18).

7. Method according to any one of claims 5 or 6, wherein said step (c) of housing a reinforcing element (80) in said seat (18) comprises the following sub-step:
(c3) grinding the upper face of said filling layer (50) and of said reinforcing element (80) inserted therein.

8. Method according to any one of the preceding claims, wherein said step (d) of coupling a second coating layer (70) to an upper face of said filling layer (50) comprises the following sub-phase:
(d1) exert pressure on said second coating layer (70) along an axis substantially transverse to said filling layer (50) substantially planar, so as to allow stabilization of the coupling between the layers of the multilayer panel.

9. Method according to any one of the preceding claims, wherein said step (a) of positioning at least one filling layer (50) comprises the following sub-phase:
(a3) creating a vacuum condition between a perforated support surface of the processing machine and said second coating layer (30), or said lower face of said filling layer (50), so as to stabilize the half-panel during said step (b) of removing of a portion of said filling layer (50).

10. Machine for manufacturing at least one piece through the processing of a reinforced multilayer panel (100) comprising:
a working support configured to support at least one filler layer (50) of the multilayer panel,
a working group, movable on said filling layer (50), wherein said working group comprises a milling member for obtaining at least one seat (18) on said filling layer (50) and / or for removing at least a portion of the second coating layer (70),
a positioning unit for positioning at least one reinforcing element (80) in said at least one seat (18);
a press unit, configured to allow the coupling of a first coating layer (30) to a lower face of the filling layer (50), and the coupling of a second coating layer (70) to an upper face of the filling layer (50),
said machine being **characterized in that** it comprises a logic control unit configured to carry out the steps of the method according to any one of claims 1 to 9.

11. Machine according to the preceding claim, wherein said positioning unit comprises an extrusion or casting head of a thermoplastic or thermosetting material for the realization of said reinforcing element (80) in said seat (18).

12. Machine according to the preceding claim, comprising a hardening station of said reinforcement element (80), cast or extruded, in said seat (18).

## Patentansprüche

1. Verfahren zum Herstellen mindestens eines Teils durch die Verarbeitung einer verstärkten Mehrschichtplatte (100), die auf einer Plattenverarbeitungsmaschine angeordnet ist, wobei die Mehrschichtplatte eine im Wesentlichen ebene Füllschicht (50), eine erste Überzugsschicht (30), die mit einer ersten Fläche der Füllschicht (50) gekoppelt ist, und eine zweite Überzugsschicht (70), die mit einer zweiten Fläche der Füllschicht (50) gekoppelt ist, aufweist, das Verfahren umfassend einen Schritt eines Koppelns einer ersten Überzugsschicht (30) mit einer unteren Fläche der Füllschicht (50) und die folgenden Schritte:
(a) platzieren mindestens einer Füllschicht (50) auf eine Auflagefläche einer Plattenverarbeitungsmaschine, wobei der Schritt (a) eines Platzierens mindestens einer Füllschicht (50) die folgende Teilphase umfasst:
(a2) koppeln mindestens eines Identifikationselements (15) mit der Füllschicht (50), um mindestens ein Teil zu identifizieren, das durch Schneiden der mehrschichtigen Platte erlangt werden muss;
(b) entfernen mindestens eines Abschnitts der Füllschicht (50), um mindestens einen Sitz (18) zum Aufnehmen mindestens eines entsprechenden Verstärkungselements (80) zu erlangen;
(c) aufnehmen eines Verstärkungselements (80) in dem Sitz (18);
(d) koppeln einer zweiten Überzugsschicht (70) mit einer oberen Fläche der Füllschicht (50);
(e) entfernen eines Abschnitts der zweiten Überzugsschicht (70) an dem Verstärkungselement (80), um von einer Position außerhalb der Platte den Zugang zu dem Verstärkungselement (80) zu ermöglichen;
(f) schneiden der Mehrschichtplatte, um das mindestens eine Teil zu erlangen.

2. Verfahren nach dem vorherigen Anspruch, umfassend einen Schritt eines Verschachtelns und Optimierens der Position der zu bearbeitenden Teile in derselben Platte;

3. Verfahren nach einem der vorherigen Ansprüche, wobei der Schritt eines Koppelns einer ersten Überzugsschicht (30) mit einer unteren Fläche der Füllschicht (50) vor dem Schritt (a) eines Positionierens mindestens einer Füllschicht (50) auf einer Auflagefläche einer Plattenverarbeitungsmaschine erfolgt.

4. Verfahren nach einem der vorherigen Ansprüche, wobei der Schritt (a) eines Positionierens mindestens einer Füllschicht (50) die folgende Teilphase umfasst: (a1) erfassen von Positionsdaten der mindestens einen Füllschicht (50).

5. Verfahren nach einem der vorherigen Ansprüche, wobei der Schritt (c) eines Aufnehmens eines Verstärkungselements (80) in dem Sitz (18) den folgenden Teilschritt umfasst:
(c1) gießen/Extrudieren eines thermoplastischen oder duroplastischen Materials in den Sitz (18), um das Verstärkungselement (80) zu bilden.

6. Verfahren nach dem vorherigen Anspruch, wobei die Teilphase (c1) eines Gießens/Extrudierens eines thermoplastischen oder wärmehärtenden Materials in den Sitz (18) zum Bilden des Verstärkungselements (80) die folgende Teilphase umfasst:
(c2) verfestigen des in den Sitz (18) gegossenen oder extrudierten thermoplastischen oder duroplastischen Materials.

7. Verfahren nach einem der Ansprüche 5 oder 6, wobei der Schritt (c) eines Aufnehmens eines Verstärkungselements (80) in dem Sitz (18) den folgenden Teilschritt umfasst:
(c3) schleifen der oberen Fläche der Füllschicht (50) und des darin eingesetzten Verstärkungselements (80).

8. Verfahren nach einem der vorherigen Ansprüche, wobei der Schritt (d) eines Koppelns einer zweiten Überzugsschicht (70) mit einer oberen Fläche der Füllschicht (50) die folgende Teilphase umfasst:
(d1) Ausüben von Druck auf die zweite Überzugsschicht (70) entlang einer im Wesentlichen quer zu der Füllschicht (50) verlaufenden, im Wesentlichen ebenen Achse, um eine Stabilisierung der Kopplung zwischen den Schichten der Mehrschichtplatte zu ermöglichen.

9. Verfahren nach einem der vorherigen Ansprüche, wobei der Schritt (a) eines Positionierens mindestens einer Füllschicht (50) die folgende Teilphase umfasst: (a3) schaffen eines Vakuumzustands zwischen einer perforierten Auflagefläche der Verarbeitungsmaschine und der zweiten Überzugsschicht (30) oder der unteren Fläche der Füllschicht (50), um die Halbplatte während des Schritts (b) eines Entfernens eines Abschnitts der Füllschicht (50) zu stabilisieren.

10. Maschine zum Herstellen von mindestens einem Teil durch die Verarbeitung einer verstärkten Mehrschichtplatte (100), umfassend: einen Arbeitsträger, der konfiguriert ist, um mindestens eine Füllschicht (50) der Mehrschichtplatte zu tragen, eine Arbeitsgruppe, die auf der Füllschicht (50) beweglich ist, wobei die Arbeitsgruppe ein Fräselement umfasst, um mindestens einen Sitz (18) auf der Füllschicht (50) zu erlangen und mindestens einen Abschnitt der zweiten Überzugsschicht (70) zu entfernen, eine Positionierungseinheit zum Positionieren mindestens eines Verstärkungselements (80) in dem mindestens einen Sitz (18); eine Presseneinheit, die konfiguriert ist, um die Kopplung einer ersten Überzugsschicht (30) mit einer unteren Fläche der Füllschicht (50) und die Kopplung einer zweiten Überzugsschicht (70) mit einer oberen Fläche der Füllschicht (50) zu ermöglichen, wobei die Maschine **dadurch gekennzeichnet ist, dass** sie eine logische Steuereinheit umfasst, die konfiguriert ist, um die Schritte des Verfahrens nach einem der Ansprüche 1 bis 9 durchzuführen.

11. Maschine nach dem vorherigen Anspruch, wobei die Positioniereinheit einen Extrusions- oder Gießkopf aus einem thermoplastischen oder wärmehärtenden Material für die Realisierung des Verstärkungselements (80) in dem Sitz (18) umfasst.

12. Maschine nach dem vorherigen Anspruch, umfassend eine Aushärtungsstation des gegossenen oder extrudierten Verstärkungselements (80) in dem Sitz (18) .

## Revendications

1. Procédé de fabrication d'au moins une pièce par le traitement d'un panneau multicouche renforcé (100), disposé sur une machine de traitement de panneaux, dans lequel le panneau multicouche a une couche de remplissage sensiblement plane (50), une première couche de revêtement (30) couplée à une première face de la couche de remplissage (50), et une seconde couche de revêtement (70) couplée à une seconde face de la couche de remplissage (50), ledit procédé comprenant une étape de couplage d'une première couche de revêtement (30) à une face inférieure de ladite couche de remplissage (50) et les étapes suivantes :
(a) placer au moins une couche de remplissage (50) sur une surface de support d'une machine de traitement de panneaux, ladite étape (a) de placement d'au moins une couche de remplissage (50) comprend la sous-phase suivante:
(a2) coupler au moins un élément d'identification (15) à ladite couche de remplissage (50) pour identifier au moins une pièce qui doit être obtenue par découpe du panneau multicouche;
(b) enlever au moins une partie de ladite couche de remplissage (50) pour obtenir au moins un siège (18) destiné à loger au moins un élément de renforcement respectif (80);
(c) loger un élément de renforcement (80) dans ledit siège (18);
(d) coupler une seconde couche de revêtement (70) à une face supérieure de ladite couche de remplissage (50) ;
(e) enlever une partie de la seconde couche de revêtement (70) au niveau de l'élément de renforcement (80), de manière à permettre l'accès à cet élément de renforcement (80) à partir d'une position extérieure au panneau;
(f) couper le panneau multicouche pour obtenir ladite au moins une pièce.

2. Procédé selon la revendication précédente, comprenant une étape d'imbrication et d'optimisation de la position des pièces à usiner dans un même panneau;

3. Procédé selon l'une quelconque des revendications précédentes, dans lequel ladite étape de couplage d'une première couche de revêtement (30) à une face inférieure de ladite couche de remplissage (50) est réalisée avant ladite étape (a) de positionnement d'au moins une couche de remplissage (50) sur une surface de support d'une machine de traitement de panneaux.

4. Procédé selon l'une quelconque des revendications précédentes dans lequel ladite étape (a) de positionnement d'au moins une couche de remplissage (50) comprend la sous-phase suivante:
(a1) détecter des données de positionnement de ladite au moins une couche de remplissage (50).

5. Procédé selon l'une quelconque des revendications précédentes, dans lequel ladite étape (c) de logement d'un élément de renforcement (80) dans ledit siège (18) comprend la sous-étape suivante:
(c1) coulage/extrusion d'un matériau thermoplastique ou thermodurcissable dans ledit siège (18) pour former ledit élément de renforcement (80).

6. Procédé selon la revendication précédente, dans lequel ladite sous-phase (c1) de coulage/extrusion d'un matériau thermoplastique ou thermodurcissable dans ledit siège (18) pour former ledit élément de renforcement (80) comprend la sous-phase suivante: (c2) solidification dudit matériau thermoplastique ou thermodurcissable coulé ou extrudé dans ledit siège (18) .

7. Procédé selon l'une quelconque des revendications 5 ou 6, dans lequel ladite étape (c) de logement d'un élément de renforcement (80) dans ledit siège (18) comprend la sous-étape suivante:
(c3) ponçage de la face supérieure de ladite couche de remplissage (50) et dudit élément de renforcement (80) qui y est inséré.

8. Procédé selon l'une quelconque des revendications précédentes, dans lequel ladite étape (d) de couplage d'une seconde couche de revêtement (70) à une face supérieure de ladite couche de remplissage (50) comprend la sous-phase suivante:
(d1) exercer une pression sur ladite seconde couche de revêtement (70) selon un axe sensiblement transversal à ladite couche de remplissage (50) sensiblement plan, de manière à permettre la stabilisation du couplage entre les couches du panneau multicouche.

9. Procédé selon l'une quelconque des revendications précédentes, dans lequel ladite étape (a) de positionnement d'au moins une couche de remplissage (50) comprend la sous-phase suivante:
(a3) création d'une condition de vide entre une surface de support perforée de la machine de traitement et ladite seconde couche de revêtement (30), ou ladite face inférieure de ladite couche de remplissage (50), de manière à stabiliser la demi-panneau pendant ladite étape (b) de retrait d'une partie de ladite couche de remplissage (50).

10. Machine pour la fabrication d'au moins une pièce par le traitement d'un panneau multicouche renforcé (100) comprenant: un support de travail configuré pour supporter au moins une couche de remplissage (50) du panneau multicouche, un groupe de travail, mobile sur ladite couche de remplissage (50), dans lequel ledit groupe de travail comprend un élément de fraisage pour obtenir au moins un siège (18) sur ladite couche de remplissage (50) et/ou pour enlever au moins une partie de la seconde couche de revêtement (70), une unité de positionnement pour positionner au moins un élément de renforcement (80) dans ledit au moins un siège (18); une unité de pressage, configurée pour permettre le couplage d'une première couche de revêtement (30) sur une face inférieure de la couche de remplissage (50), et le couplage d'une seconde couche de revêtement (70) sur une face supérieure de la couche de remplissage (50), ladite machine étant **caractérisée en ce qu'**elle comprend une unité de commande logique configurée pour mettre en œuvre les étapes du procédé selon l'une quelconque des revendications 1 à 9.

11. Machine selon la revendication précédente, dans laquelle ladite unité de positionnement comprend une tête d'extrusion ou de coulage d'un matériau thermoplastique ou thermodurcissable pour la réalisation dudit élément de renforcement (80) dans ledit siège (18).

12. Machine selon la revendication précédente, comprenant un poste de durcissement dudit élément de renforcement (80), coulé ou extrudé, dans ledit siège (18) .
